# EUROPEAN PATENT APPLICATION

(11) **EP 3 926 735 A1**
(43) Date of publication of application: **22.12.2021**
(21) Application number: 20876608.9
(22) Date of filing: 06.10.2020
(51) Int. Cl.: H01M 10/658, H01M 10/643, H01M 50/30, H01M 10/625, H01M 10/613, H01M 50/20, H01M 10/48, A62C 3/16, A62C 2/06

(54) **BATTERY PACK, ELECTRONIC DEVICE, AND VEHICLE**

(30) Priority: 15.10.2019 KR 20190127810
(71) Applicant: LG ENERGY SOLUTION, LTD., Seoul 07335 (KR)
(72) Inventor: PARK, Ji-Soo, Daejeon 34122 (KR)
(74) Representative: Plasseraud IP
(86) International application number: PCT/KR2020/013604
(87) International publication number: WO 2021/075780

(57) **Abstract**

Disclosed is a battery pack, which includes at least two cell assemblies respectively including a plurality of can-type secondary batteries arranged in a front and rear direction in a laid-down form so that electrode terminals thereof are located in a left and right direction, the at least two cell assemblies being arranged in a left and right direction; and a pack housing including an outer wall configured to form an inner space for accommodating the at least two cell assemblies, and a screen wall located between the accommodated at least two cell assemblies so that the at least two cell assemblies do not directly face each other, the screen wall having a recessed portion so that at least a part of the screen wall is spaced apart from an end of the can-type secondary battery by a predetermined distance to reduce the propagation of flame or gas toward other can-type secondary batteries when the flame or gas is discharged from some of the plurality of can-type secondary batteries.

## Description

### TECHNICAL FIELD

The present disclosure relates to a battery pack having a handle, an electronic device, and a vehicle, and more particularly, to a battery pack with improved safety by effectively preventing fire from propagating.

The present application claims priority to Korean Patent Application No. 10-2019-0127810 filed on October 15, 2019 in the Republic of Korea, the disclosures of which are incorporated herein by reference.

### BACKGROUND ART

Secondary batteries currently commercialized include nickel cadmium batteries, nickel hydrogen batteries, nickel zinc batteries, lithium secondary batteries and so on. Among them, the lithium secondary batteries are more highlighted in comparison to nickel-based secondary batteries due to advantages such as free charging and discharging, caused by substantially no memory effect, very low self-discharge rate, and high energy density.

The lithium secondary battery mainly uses lithium-based oxides and carbonaceous materials as a positive electrode active material and a negative electrode active material, respectively. The lithium secondary battery includes an electrode assembly in which a positive electrode plate coated with the positive electrode active material and a negative electrode plate coated with the negative electrode active material are disposed with a separator being interposed therebetween, and an exterior, for example a cylindrical battery cell, hermetically containing the electrode assembly together with an electrolyte.

In recent years, secondary batteries are widely used not only in small-sized devices such as portable electronic devices, but also in medium-sized and large-sized devices such as vehicles and power storage systems. When used in such a medium-sized or large-sized device, a large number of secondary batteries are electrically connected to increase capacity and output. In particular, can-type secondary batteries are frequently used in such a medium-sized or large-sized device since they may be easily stacked and stored.

Meanwhile, as the need for a large-capacity structure is increasing in recent years along with the utilization as an energy storage source, the demand for a battery pack including a plurality of secondary batteries electrically connected in series and/or in parallel is also increasing. Moreover, in order to construct a battery pack having a high current and high capacity in a smaller volume, in many cases, a plurality of secondary batteries electrically connected in an expanded manner are densely arranged.

In particular, the battery pack may cause an accident in which a plurality of secondary batteries ignite or explode due to certain factors (short circuit, poor operation or configuration failure) or the secondary batteries ignite or explode due to an external shock. Moreover, since the plurality of secondary batteries are arranged very close to each other in the battery pack, even when one secondary battery ignites or explodes, the heat is easily transferred to other neighboring secondary batteries through hot gas or flame, thereby easily causing secondary explosion or ignition.

Therefore, when a fire or short circuit occurs in some of the plurality of can-type secondary batteries so that the high-temperature gas or flame therein is discharged, it is very important to prevent the discharged high-temperature gas or flame from propagating to other neighboring can-type secondary battery (namely, to minimize heat transfer).

### DISCLOSURE

### Technical Problem

The present disclosure is designed to solve the problems of the related art, and therefore the present disclosure is directed to providing a battery pack with improved safety by effectively preventing fire from propagating.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack, comprising:
at least two cell assemblies respectively including a plurality of can-type secondary batteries arranged in a front and rear direction in a laid-down form so that electrode terminals thereof are located in a left and right direction, the at least two cell assemblies being arranged in a left and right direction; and
a pack housing including an outer wall configured to form an inner space for accommodating the at least two cell assemblies, and a screen wall located between the accommodated at least two cell assemblies so that the at least two cell assemblies do not directly face each other, the screen wall having a recessed portion so that at least a part of the screen wall is spaced apart from an end of the can-type secondary battery by a predetermined distance to reduce the propagation of flame or gas toward other can-type secondary batteries when the flame or gas is discharged from some of the plurality of can-type secondary batteries.

Also, the electrode terminals may include a positive electrode terminal and a negative electrode terminal,
the positive electrode terminal of each of the plurality of can-type secondary batteries may have a gas vent portion configured to discharge gas inside the can-type secondary battery to the outside when an internal pressure of the can-type secondary battery increases over a predetermined level.

Moreover, the plurality of can-type secondary batteries may be arranged so that at least one can-type secondary battery having the positive electrode terminal located at a left side and at least one can-type secondary battery having the positive electrode terminal located at a right side are alternately provided.

In addition, the recessed portion may be provided so that a part of the screen wall facing the positive electrode terminal is recessed in a left direction or a right direction.

Further, a discharge rib protruding in an inner direction may be formed at an inner surface of the outer wall of the pack housing so that the outer wall has a space to be separated from the can-type secondary battery by a predetermined distance.

Also, the pack housing may have a gas discharge hole perforated in the outer wall thereof to discharge an internal gas to the outside.

Moreover, the recessed portion may have a moving hole perforated in a part thereof so that the gas discharged through the gas vent portion moves toward the gas discharge hole therethrough.

Also, the recessed portion may have a guide rib configured to guide the gas to move toward the moving hole.

Moreover, some of the plurality of can-type secondary batteries may be arranged in the upper and lower direction, and
the screen wall may have a step portion formed in a region thereof facing the plurality of can-type secondary batteries stacked in the upper and lower direction so that the step portion has a greater height in the upper and lower direction than the remaining region.

In addition, the screen wall may include a screen rib that is located at a middle height of the plurality of can-type secondary batteries stacked in the upper and lower direction, configured to protrude in the left and right direction to prevent the gas discharged from the gas vent portion from moving in the upper and lower direction, and provided to linearly extend in the front and rear direction.

Further, the battery pack may further comprise an external input/output electric wire electrically connected to the plurality of can-type secondary batteries, and
the outer wall of the pack housing may include an accommodation groove recessed in an inner direction to accommodate a part of the electric wire therein and formed to linearly extend along the outer wall, and a plurality of fixing ribs configured to protrude in an upper direction or a lower direction at an inner surface of the accommodation groove and spaced apart from each other by a predetermined distance.

Moreover, the fixing ribs may include:
a first fixing rib configured to protrude upward at an inner lower surface of the accommodation groove; and
a second fixing rib configured to protrude downward at an inner upper surface of the accommodation groove.

Also, the battery pack may further comprise:
a module case configured to have an empty space formed therein so that the plurality of can-type secondary batteries are accommodated therein;
at least one bus bar electrically connected to the plurality of can-type secondary batteries;
a battery management unit having a printed circuit board configured to control charging and discharging of the plurality of can-type secondary batteries; and
a sensing wire configured to electrically connect the bus bar and the battery management unit.

Moreover, the module case may have an embedding groove in which the sensing wire is inserted and disposed.

In addition, a plurality of fixing protrusions formed to protrude toward the sensing wire may be formed at the inside of the embedding groove.

Also, the plurality of fixing protrusions may be formed to protrude toward each other so that the sensing wire is interposed between the plurality of fixing protrusions.

Further, in another aspect of the present disclosure, there is also provided an electronic device, comprising at least one battery pack.

Also, in another aspect of the present disclosure, there is also provided a vehicle, comprising at least one battery pack.

### Advantageous Effects

According to an embodiment of the present disclosure, since the pack housing includes the screen wall having the recessed portion so that at least a part of the screen wall is spaced apart from the end of the can-type secondary battery by a predetermined distance, when flame or gas is ejected from some of the plurality of can-type secondary batteries, it is possible to reduce the propagation of the flame or gas to other can-type secondary batteries. That is, since the recessed portion has a space recessed to accommodate the gas and flame, the amount of gas and flame dispersed to the surroundings may be effectively reduced. Accordingly, it is possible to effectively prevent the propagation of fire between the plurality of can-type secondary batteries, thereby increasing the safety of the battery pack.

Moreover, according to an embodiment of the present disclosure, since the recessed portion has the moving hole perforated in a part thereof so that the gas discharged through the gas vent portion moves toward the gas discharge hole, it is possible to smoothly move high-temperature gas to the gas discharge hole, thereby preventing the high-temperature gas from stagnating inside the battery pack. Accordingly, it is possible to effectively prevent thermal runaway or an increase of fire.

In addition, according to an embodiment of the present disclosure, since the screen wall includes the screen rib at a middle height of the plurality of can-type secondary batteries stacked in the upper and lower direction and configured to protrude in the left and right direction to prevent the gas discharged from the gas vent portion from moving in the upper and lower direction and extend linearly in the front and rear direction, when fire occurs in the first stage among the plurality of can-type secondary batteries stacked in two layers in the cell assembly, it is possible to prevent the discharged gas or flame from propagating to the can-type secondary battery located in the second stage, thereby effectively reducing the increase of fire. Accordingly, the safety of the battery pack may be greatly increased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery pack according to an embodiment of the present disclosure.
FIG. 2 is an exploded perspective view schematically showing some components of the battery pack according to an embodiment of the present disclosure.
FIG. 3 is a sectional view schematically showing a can-type secondary battery according to an embodiment of the present disclosure.
FIG. 4 is a perspective view schematically showing a cell assembly, employed at a battery module according to another embodiment of the present disclosure.
FIG. 5 is a horizontally sectional enlarged view schematically showing a portion of the battery pack, taken along the line C-C' of FIG. 1.
FIG. 6 is a perspective sectional view schematically showing a pack housing, employed at the battery pack, taken along the line A-A' of FIG. 1.
FIG. 7 is a perspective sectional enlarged view showing a region C of FIG. 6 in a pack housing according to another embodiment.
FIG. 8 is a horizontally sectional perspective view schematically showing a portion of a pack housing, employed at the battery pack another embodiment of the present disclosure.
FIG. 9 is a horizontally sectional perspective view schematically showing a portion of a pack housing, employed at the battery pack another embodiment of the present disclosure.
FIG. 10 is a perspective enlarged view schematically showing a region D of the cell assembly of FIG. 4.
FIG. 11 is a right view schematically showing a pack housing, employed at the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

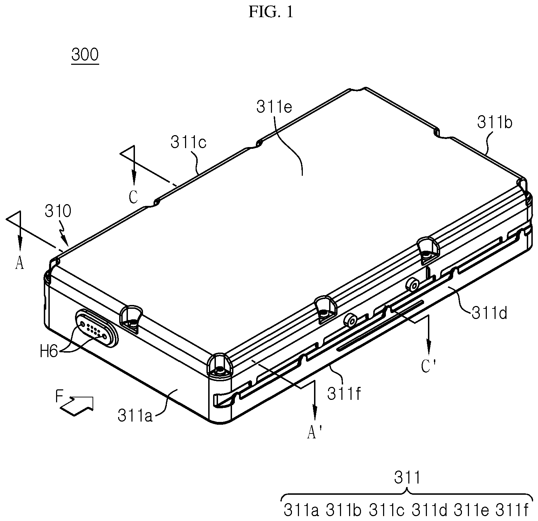

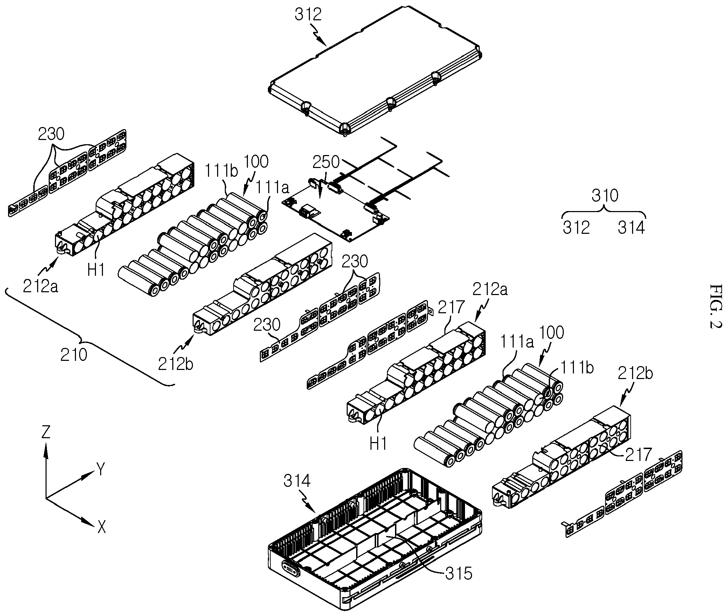

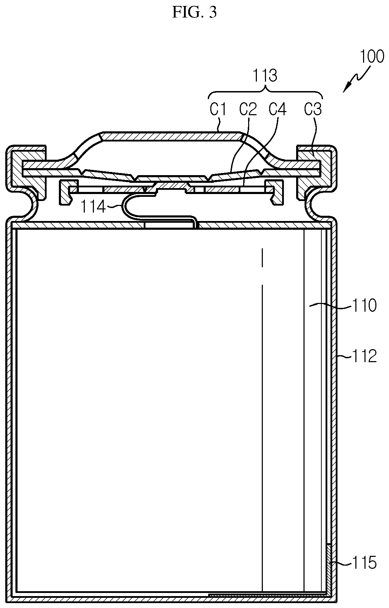

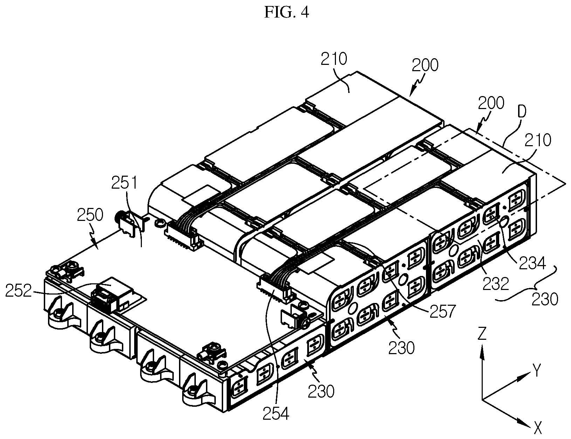

FIG. 1 is a perspective view schematically showing a battery pack according to an embodiment of the present disclosure. FIG. 2 is an exploded perspective view schematically showing some components of the battery pack according to an embodiment of the present disclosure. FIG. 3 is a sectional view schematically showing a can-type secondary battery according to an embodiment of the present disclosure. Also, FIG. 4 is a perspective view schematically showing a cell assembly, employed at a battery module according to another embodiment of the present disclosure.

Referring to FIGS. 1 to 4, a battery pack 300 according to an embodiment of the present disclosure includes at least two cell assemblies 200 and a pack housing 310.

Specifically, the at least two cell assemblies 200 may be arranged in a left and right direction, when viewed in an F direction. For example, as shown in FIG. 4, two cell assemblies 200 may be disposed adjacent to each other in the left and right direction.

Meanwhile, terms indicating directions such as 'front', 'rear', 'left', 'right', 'upper' and 'lower' used in this specification may vary depending on the position of an observer or the form of a placed object. However, in this specification, for convenience of explanation, the directions such as 'front', 'rear', 'left', 'right', 'upper' and 'lower' are distinguishably expressed based on the case of being viewed in the F direction.

Each of the at least two cell assemblies 200 may include 100 of a plurality of can-type secondary batteries. Each of the plurality of can-type secondary batteries 100 may be shaped so that electrode terminals 111 are laid down in the left and right direction. In addition, the plurality of can-type secondary batteries 100 may be arranged in a front and rear direction. For example, 40 can-type secondary batteries 100 may be arranged in the front and rear direction in a laid-down form so that the electrode terminals 111 are positioned in the left and right direction.

The plurality of can-type secondary batteries 100 may be arranged so that at least one can-type secondary battery 100 having a positive electrode terminal 111a at a left side and at least one can-type secondary battery 100 having a positive electrode terminal 111a at a right side are alternately provided in a front rear direction. For example, as shown in FIG. 2, 32 can-type secondary batteries 100 stacked in two layers may be arranged so that two can-type secondary batteries 100 having the positive electrode terminal 111a located at the left side and two can-type secondary batteries 100 having the positive electrode terminal at the right side are alternately provided in the front and rear direction.

Here, the can-type secondary battery 100 may include an electrode assembly 110, a battery can 112, and a cap assembly 113.

The electrode assembly 110 may have a structure in which a positive electrode plate and a negative electrode plate are wound with a separator being interposed therebetween. Also, a positive electrode tab 114 may be attached to the positive electrode plate to be connected to the cap assembly 113, and a negative electrode tab 115 may be attached to negative electrode plate to be connected to a lower end of the battery can 112.

The battery can 112 may have an empty space formed therein so that the electrode assembly 110 is accommodated therein. In particular, the battery can 112 may be configured in a cylindrical or rectangular shape with an open top. In addition, the battery can 112 may be made of a metal material such as steel or aluminum to secure rigidity. In addition, the negative electrode tab may be attached to the lower end of the battery can 112 so that not only a lower part of the battery can 112 but also the battery can 112 itself may function as a negative electrode terminal 111b.

The cap assembly 113 may be coupled to the open top of the battery can 112 to seal the open end of the battery can 112. The cap assembly 113 may have a circular shape or a rectangular shape according to the shape of the battery can 112, and may include sub-components such as a top cap C1, a gas vent portion C2 and a gasket C3.

Here, the top cap C1 is positioned at the top of the cap assembly 113 and may be configured to protrude in an upper direction. In particular, the top cap C1 may function as the positive electrode terminal 111a in the can-type secondary battery 100. Therefore, the top cap C1 may be electrically connected to another secondary battery 100 or a charging device through an external device such as a bus bar 230. The top cap C1 may be made of a metal material such as stainless steel or aluminum, for example.

The gas vent portion C2 may be configured to change its shape when an internal pressure of the secondary battery 100, namely an internal pressure of the battery can 112, increases over a certain level. In addition, the gasket C3 may be made of a material with electrical insulation so that edge portions of the top cap C1 and the gas vent portion C2 are insulated from the battery can 112.

For example, as shown in FIG. 3, the gas vent portion C2 may be provided to the positive electrode terminal 111a of each of the plurality of can-type secondary batteries 100, and the gas vent portion C2 may not be provided to the negative electrode terminal 111b thereof. The gas vent portion C2 may be configured to discharge the gas inside the battery can to the outside when the pressure inside the battery can increases over a predetermined level.

Meanwhile, the cap assembly 113 may further include a current interrupt member C4. The current interrupt member C4 is also called CID (Current Interrupt Device). If the shape of the gas vent portion C2 is reversed as internal pressure of the battery increases due to gas generation, the contact between the gas vent portion C2 and the current interrupt member C4 is cut off, or the current interrupt member C4 is damaged, thereby cutting the electrical connection between the gas vent portion C2 and the electrode assembly 110.

The configuration of the can-type secondary battery 100 is widely known to those skilled in the art at the time of filing of this application and thus will not be described in detail in this specification. In addition, although an example of the can-type secondary battery 100 is shown in FIG. 3, the battery pack 300 according to the present disclosure is not limited to a specific configuration of the can-type secondary battery 100. That is, various secondary batteries 100 known at the time of filing of this application may be employed in the battery pack 300 according to the present disclosure.

In addition, the can-type secondary battery 100 of FIG. 3 is illustrated as a cylindrical secondary battery 100, but a rectangular secondary battery 100 may be also applied to the battery pack 300 according to the present disclosure.

Referring to FIGS. 1 and 2 again, the pack housing 310 may include an outer wall 311 that forms an inner space capable of accommodating the at least two cell assemblies 200. Specifically, the outer wall 311 of the pack housing 310 may include a front wall 311a, a rear wall 311b, a left wall 311c, a right wall 311d, an upper wall 311e, and a lower wall 311f. In addition, the pack housing 310 includes an upper housing 312 formed to cover an upper portion of the at least two cell assemblies 200 and a lower housing 314 coupled to a lower portion of the upper housing 312 and having a space for accommodating the at least two cell assemblies 200 therein.

Meanwhile, referring again to FIG. 2, the cell assembly 200 may include a module case 210.

The module case 210 may have an empty space formed therein to accommodate the plurality of can-type secondary batteries 100. In the module case 210, a plurality of hollow H1 may be formed to give a space for accommodating each can-type secondary battery 100. In addition, the module case 210 may be at least partly made of an electrically insulating polymer material. For example, the polymer material may be polyvinyl chloride.

In addition, referring to FIG. 2, the module case 210 may have a mounting portion 217 formed therein so that a bus bar 230 is mounted thereto. Specifically, the mounting portion 217 may be provided at a left side and a right side of the module case 210, respectively. For example, as shown in FIG. 2, the mounting portion 217 may be provided to each of the left and right sides of one module case 210. Each mounting portion 217 may have a mounting space in which three bus bars 230 may be mounted.

In addition, the module case 210 may include a first frame 212a and a second frame 212b. Here, the first frame 212a and the second frame 212b may be configured to encounter and couple to each other at one side and the other side thereof in a left and right direction (X direction). For example, as in FIG. 2, when viewed from the F direction of FIG. 1, the first frame 212a may be disposed at the left side of the plurality of secondary batteries 100 to accommodate a left portion of the plurality of secondary batteries 100. In addition, the second frame 212b may be positioned at a right side of the plurality of secondary batteries 100 to accommodate the right portion of the plurality of secondary batteries 100.

In particular, the first frame 212a and the second frame 212b may be configured to cover one side and the other side of the plurality of secondary batteries 100, respectively, so as to cover the outer surface of the can-type secondary battery 100 as a whole. For example, if the can-type secondary battery 100 is a cylindrical secondary battery, the first frame 212a and the second frame 212b may cover the outer surface of the can-type secondary battery 100 as a whole, so that the upper and lower sides of the secondary battery 100 are not exposed out of the battery pack 300.

For example, as shown in FIG. 2, the first frame 212a may be disposed at the left side of the plurality of secondary batteries 100 to accommodate the left portion of the plurality of secondary batteries 100. In addition, the second frame 212b may be positioned at the right side of the plurality of secondary batteries 100 to accommodate the right portion of the plurality of secondary batteries 100.

Therefore, according to this configuration of the present disclosure, since the module case 210 prevents the side portions of the secondary batteries 100 from being exposed, the secondary batteries 100 may be insulated more effectively, and the secondary batteries 100 may be protected from external physical and chemical elements.

Meanwhile, referring to FIG. 4 along with FIG. 2, at least one bus bar 230 electrically connected to the plurality of can-type secondary batteries 100 may be further included. Further, the bus bar 230 may electrically connect the plurality of can-type secondary batteries 100, for example all secondary batteries 100 or some secondary batteries 100, to each other. To this end, at least a part of the bus bar 230 may be made of an electrically conductive material. For example, the bus bar 230 may be made of a metal material such as copper, aluminum or nickel. In particular, in the present disclosure, the bus bar 230 may include a body portion 232 and a connection portion 234 as shown in FIG. 4.

The body portion 232 of the bus bar 230 may be formed in a plate shape. Moreover, the bus bar 230 may be configured in the form of a metal plate to ensure rigidity and electrical conductivity. In particular, the body portion 232 may be configured to be erected in an upper and lower direction (Z-axis direction in the drawing) along the electrode terminals 111 of the plurality of can-type secondary batteries 100.

That is, in the present disclosure, if the plurality of can-type secondary batteries 100 are arranged in the front and rear direction (Y-axis direction in the drawing) and/or in the upper and lower direction (Z-axis direction in the drawing) to be laid down in the left and right direction (X-axis direction in the drawing), the plurality of can-type secondary batteries 100 may be arranged so that the electrode terminals 111 are located in the left and right direction.

Accordingly, the bus bar 230 may be provided at each of the left and right sides of the plurality of can-type secondary batteries 100. The body portion 232 of the bus bar 230 may be formed in a plate shape to erect flat in the front and rear direction or the upper and lower direction according to the arrangement direction of the electrode terminals 111 of the plurality of secondary batteries 100.

Meanwhile, referring to FIGS. 2 and 4 again, the battery pack 300 may further include a battery management unit 250. The battery management unit 250 may include a printed circuit board 251. Further, the printed circuit board 251 may be configured to control charging and discharging of the battery by turning on/off a switch element (not shown) according to the charging or discharging state of the cell assembly 200.

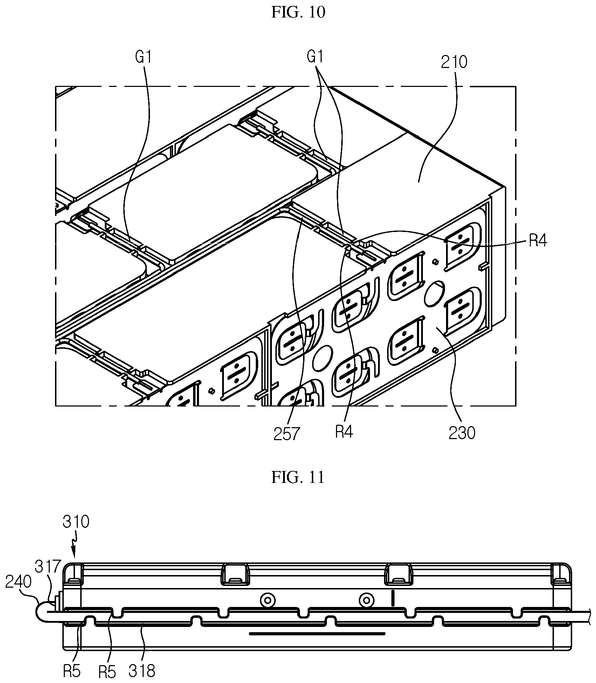

Moreover, the battery management unit 250 may include an element (not shown) capable of controlling charging/discharging voltage and/or current of the secondary battery 100 or an element (not shown) for protecting the secondary battery 100 not to come into an overcharged state and/or an overdischarged state. In addition, an external input/output connector 252 may be coupled to one side of the printed circuit board 251 of the battery management unit 250. The external input/output connector 252 may be electrically connected to an external device through a power cable 240 (FIG. 11). In addition, the battery management unit 250 may include a connector 254 electrically connected to the bus bar 230 through a plurality of sensing wires 257. For example, as shown in FIG. 4, two connectors 254 may be electrically connected to the plurality of bus bars 230 through the plurality of sensing wires 257, respectively. That is, the battery pack 300 of the present application may further include the sensing wire 257 that electrically connects the bus bar 230 and the connector 254.

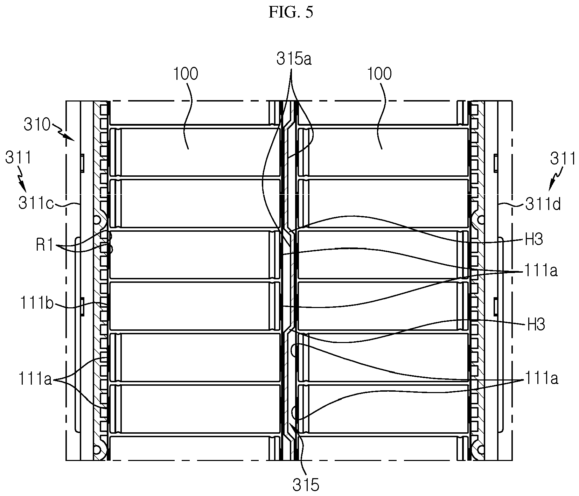

FIG. 5 is a horizontally sectional enlarged view schematically showing a portion of the battery pack, taken along the line C-C' of FIG. 1.

Referring to FIG. 5 along with FIGS. 2 and 4, the pack housing 310 may include a screen wall 315 positioned between the accommodated at least two cell assemblies 200 so that the at least two cell assemblies 200 does not directly face each other. When flame or gas is ejected from some of the plurality of can-type secondary batteries 100, the screen wall 315 may be configured to reduce the propagation of the flame or gas to other can-type secondary batteries 100. For example, the screen wall 315 may have a shape extending upward from an inner lower surface of the pack housing 310. Alternatively, the screen wall 315 may have a shape extending downward from an inner upper surface of the pack housing 310.

In addition, the screen wall 315 may have a recessed portion 315a so that at least a part of the screen wall 315 is spaced apart from an end of the can-type secondary battery 100 by a predetermined distance. The recessed portion 315a may have a structure in which a part of the screen wall 315 facing the positive electrode terminal 111a is recessed in a left direction (a negative direction of the X-axis) or a right direction (a positive direction of the X-axis). For example, as shown in FIG. 5, in the screen wall 315, the recessed portion 315a at which a part of the screen wall 315 facing the positive electrode terminal 111a of the cell assembly 200 located at the right side is recessed in a left direction and the recessed portion 315a at which a part of the screen wall 315 facing the positive electrode terminal 111a of the assembly 200 located at the left side is recessed in a right direction may be formed alternately in the front and rear direction. The screen wall 315 may have two recessed portions 315a with a structure recessed in the left direction and three recessed portions 315a with a structure recessed in the right direction.

Therefore, according to this configuration of the present disclosure, since the pack housing 310 includes the screen wall 315 having the recessed portion so that at least a part of the screen wall 315 is spaced apart from the end of the can-type secondary battery 100 by a predetermined distance, when flame or gas is ejected from some of the plurality of can-type secondary batteries 100, it is possible to reduce the propagation of the flame or gas to other can-type secondary batteries 100. That is, since the recessed portion 315a has a space recessed to accommodate the gas and flame, the amount of gas and flame dispersed to the surroundings may be effectively reduced. Accordingly, it is possible to effectively prevent the propagation of fire between the plurality of can-type secondary batteries 100, thereby increasing the safety of the battery pack 300.

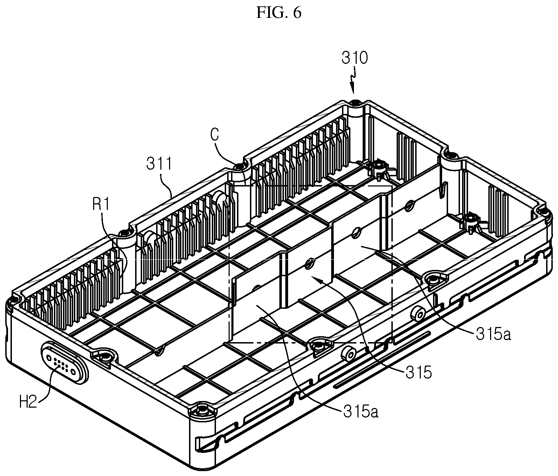

Referring to FIGS. 5 and 6 again, a plurality of discharge ribs R1 may be provided at an inner surface of the outer wall 311 of the pack housing 310. The discharge rib R1 may be shaped to protrude in an inward direction toward the can-type secondary battery 100 so that the outer wall 311 has a space to be spaced from the can-type secondary battery 100 by a predetermined distance. The discharge rib R1 may be shaped to linearly extend in the upper and lower direction so that the gas discharged from the can-type secondary battery 100 moves upward or downward along the inner surface of the outer wall 311 of the pack housing 310.

For example, as shown in FIG. 5, the plurality of discharge ribs R1 protruding in an inner direction and extending in the upper and lower direction may be formed at each of the left inner surface and the right inner surface of the outer wall 311 of the pack housing 310.

Therefore, according to this configuration of the present disclosure, since the discharge rib R1 protruding in the inner direction is provided at the inner surface of the outer wall 311 of the pack housing 310 so that the outer wall 311 has a space to be spaced from the can-type secondary battery 100 by a predetermined distance, when flame or gas is ejected toward the inner surface of the outer wall 311 of the pack housing from some of the plurality of can-type secondary batteries, the discharge rib R1 may guide the movement of gas to reduce the propagation of the flame or gas to ward other can-type secondary batteries 100. That is, since the plurality of discharge ribs R1 have a moving space capable of accommodating gas and flame, it is possible to effectively reduce the amount of gas and flame dispersed to the surroundings. Accordingly, it is possible to effectively prevent the propagation of fire between the plurality of can-type secondary batteries, thereby increasing the safety of the battery pack 300.

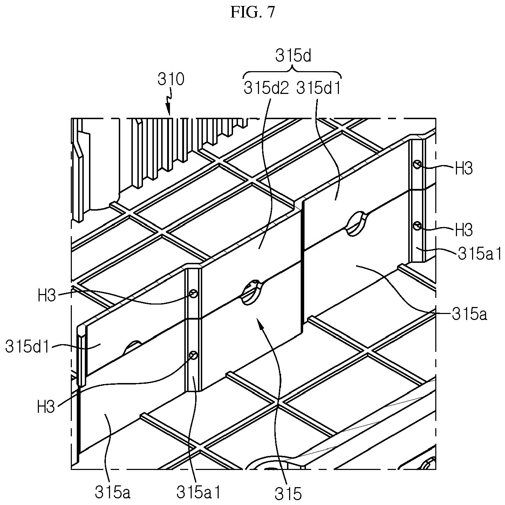

FIG. 7 is a perspective sectional enlarged view showing a region C of FIG. 6 in a pack housing according to another embodiment.

Referring to FIG. 7 along with FIG. 6, the outer wall 311 of the pack housing 310 may have a gas discharge hole H2 perforated to discharge an internal gas to the outside. For example, as shown in FIG. 6, a plurality of gas discharge holes H2 may be formed in the front wall 311a of the pack housing 310.

The recessed portion 315a may have a moving hole H3 perforated in a part thereof so that the gas discharged through the gas vent portion C2 (FIG. 3) moves toward the gas discharge hole H2. For example, as shown in FIG. 7, the moving hole H3 may be formed in a portion 315a1 of each of the five recessed portions 315a, which is bent in a diagonal direction, so that gas may be moved into the separating space of an adjacent recessed portion 315a. Thus, gas may be moved forward toward the gas discharge hole H2 along the moving hole H3 provided in each recessed portion 315a.

Therefore, according to this configuration of the present disclosure, since the recessed portion 315a has the moving hole H3 perforated in a part thereof so that the gas discharged through the gas vent portion C2 (FIG. 3) moves toward the gas discharge hole H2, it is possible to smoothly move high-temperature gas to the gas discharge hole H2, thereby preventing the high-temperature gas from stagnating inside the battery pack. Accordingly, it is possible to effectively prevent thermal runaway or an increase of fire.

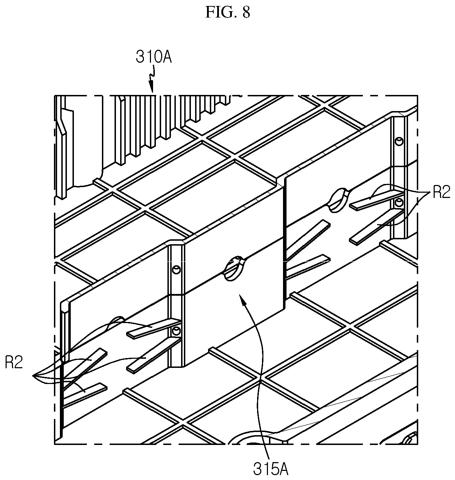

FIG. 8 is a horizontally sectional perspective view schematically showing a portion of a pack housing, employed at the battery pack another embodiment of the present disclosure.

Referring to FIG. 8, a pack housing 310A of a battery pack according to another embodiment of the present disclosure may include a guide rib R2 formed at the recessed portion 315a to guide the gas to move to the moving hole H3. For example, the guide rib R2 may be shaped to protrude in an inner direction toward the can-type secondary battery 100 and linearly extend in the front and rear direction. For example, as shown in FIG. 8, two guide ribs R2 may be shaped so that the distance between the two guide ribs R2 becomes wider as being farther from the moving hole H3. This structure guides the gas to move toward the moving hole H3.

Therefore, according to this configuration of the present disclosure, since the guide rib R2 for guiding the gas to move to the moving hole H3 is formed at the recessed portion 315a, it is possible to guide the gas to be discharged to the moving hole H3 more effectively, thereby increasing the rate of gas discharge and also preventing the gas from being transferred to other can-type secondary batteries 100 adjacent to the can-type secondary battery 100 at which fire occurs.

Referring to FIG. 7 again along with FIG. 6, the screen wall 315a may have a step portion 315d formed in a region thereof facing the plurality of can-type secondary batteries 100 stacked in the upper and lower direction so that the step portion 315d has a greater height in the upper and lower direction than the remaining region thereof. The step portion 315d may be configured to block the at least two or more cell assemblies 200 so that the at least two or more cell assemblies 200 do not face each other. The step portion 315d may be configured to have a greater height in the upper and lower direction than the remaining region thereof so that among the plurality of can-type secondary batteries 100 stacked in the upper and lower direction provided to each of the at least two cell assemblies 200, the can-type secondary battery 100 located at the top does not face a can-type secondary battery 100 located at the top of another cell assembly 200.

In addition, as shown in FIG. 7, the step portion 315d may include a first concave portion 315d1 that is bent to the left and has a concave shape, and a second concave portion 315d2 that is bent to the right and has a concave shape.

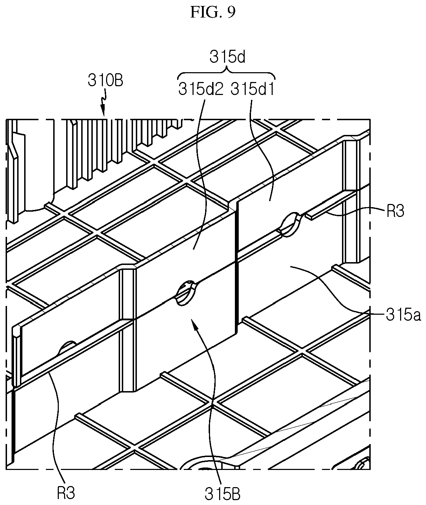

FIG. 9 is a horizontally sectional perspective view schematically showing a portion of a pack housing, employed at the battery pack another embodiment of the present disclosure.

Referring to FIG. 9 along with FIG. 2, a pack housing 310B of a battery pack 300 according to another embodiment as shown in FIG. 9 may further include a screen rib R3 provided at a screen wall 315B, when compared to the pack housing 310 of FIG. 6. That is, the battery pack 300 of FIG. 9 has the same configuration and shape except that the screen rib R3 is further provided to the pack housing 310B.

Specifically, the screen rib R3 may be located at a middle height of the plurality of can-type secondary batteries 100 stacked in the upper and lower direction. In other words, in the screen wall 315B, the screen rib R3 may be formed between the step portion 315d and a portion facing the can-type secondary battery 100 located in the first stage among the can-type secondary batteries 100 stacked in two stages in the cell assembly 200. In other words, the screen rib R3 may be located below the step portion 315d. In other words, the screen rib R3 may be formed between the step portion 315d and the recessed portion 315a.

In addition, the screen rib R3 may be shaped to protrude in the left and right direction to block the movement of gas discharged from the gas vent portion C2 in the upper and lower direction. The screen rib R3 may be shaped to linearly extend in the front and rear direction to the can-type secondary batteries 100 stacked in two stages.

Therefore, according to this configuration of the present disclosure, since the screen wall 315B includes the screen rib R3 at a middle height of the plurality of can-type secondary batteries 100 stacked in the upper and lower direction and configured to protrude in the left and right direction to prevent the gas discharged from the gas vent portion from moving in the upper and lower direction and extend linearly in the front and rear direction, when fire occurs in the first stage among the plurality of can-type secondary batteries 100 stacked in two layers in the cell assembly 200, it is possible to prevent the discharged gas or flame from propagating to the can-type secondary battery 100 located in the second stage, thereby effectively reducing the increase of fire. Accordingly, the safety of the battery pack 300 may be greatly increased.

FIG. 10 is a perspective enlarged view schematically showing a region D of the cell assembly of FIG. 4.

Referring to FIG. 10 along with FIGS. 2 and 4, an embedding groove G1 in which the sensing wire 257 may be inserted and disposed may be formed at the module case 210. The embedding groove G1 may be shaped to extend from a left end or a right end at which the bus bar 230 is located to a front end toward the connector 254 (FIG. 4). In addition, the embedding groove G1 may have a fixing protrusion R4 to fix a part of the sensing wire 257.

For example, as shown in FIG. 10, two fixing protrusions R4 protruding toward the sensing wire 257 may be provided at the inside of the embedding groove G1 so as to press and fix both sides of a part of the sensing wire 257. The two fixing protrusions R4 may be shaped to protrude toward the sensing wire 257 from one inner surface and the other inner surface of the embedding groove G1, respectively. That is, the two fixing protrusions R4 may be shaped in a protruding form to face each other so that the sensing wire 257 is interposed between the two fixing protrusions R4.

Therefore, according to this configuration of the present disclosure, since the module case 210 has the embedding groove G1 so that the sensing wire 257 is inserted and disposed therein, the sensing wire 257 may be disposed inner than the outermost surface of the module case 210. Thus, the sensing wire 257 accommodated in the embedding groove G1 does not collide or interfere with external objects, thereby reducing the risk of damage. Also, it is possible to prevent an electric short from occurring due to collision or contact with a conductive object.

FIG. 11 is a right view schematically showing a pack housing, employed at the battery pack according to an embodiment of the present disclosure.

Referring to FIG. 11 along with FIGS. 1 and 4, an external input/output power cable 240 electrically connected to the plurality of can-type secondary batteries 100 may be further included. One end of the power cable 240 may be electrically connected to the battery management unit 250. That is, the power cable 240 may be connected to the external input/output connector 252 (FIG. 4) provided in the battery management unit 250. A part of the power cable 240 may be inserted into the pack housing 310 through a through hole H6 (FIG. 1).

The outer wall 311 of the pack housing 310 may include an accommodation groove 318 and a fixing rib R5. The accommodation groove 318 may be configured to accommodate a part of the power cable 240 therein. The accommodation groove 318 may be shaped to be recessed in an inner direction toward internal components of the pack housing 310. The recessed form of the accommodation groove 318 may linearly extend along the outer wall 311.

In addition, the fixing rib R5 may be shaped to protrude from the inner surface of the accommodation groove 318 in an upper direction or a lower direction. A plurality of fixing ribs R5 may be formed to be spaced apart from each other by a predetermined distance in the front and rear direction. For example, as shown in FIG. 11, in the accommodation groove 318, a first fixing rib R5 protruding upward from the inner lower surface thereof and a second fixing rib R5 protruding downward from the inner upper surface thereof may be formed to be spaced by a predetermined interval. In the accommodation groove 318, fixing ribs R5 protruding upward from the inner lower surface thereof and fixing ribs R5 protruding downward from the inner upper surface thereof may be alternately disposed.

Therefore, according to this configuration of the present disclosure, since the outer wall 311 of the pack housing 310 includes the accommodation groove 318 and the fixing rib R5, the power cable 240 may be disposed inner than the outermost surface of the pack housing 310. Thus, the power cable 240 accommodated in the accommodation groove 318 does not collide or interfere with an external object, thereby reducing the risk of damage, and it is also possible to prevent an electric short from occurring due to collision or contact with a conductive object.

Meanwhile, an electronic device (not shown) according to an embodiment of the present disclosure includes at least one battery pack 300 described above. The electronic device may further include a device housing (not shown) having an accommodation space for accommodating the battery pack 300, and a display unit by which a user may check a state of charge of the battery pack 300.

In addition, the battery pack 300 according to an embodiment of the present disclosure may be included in a vehicle such as an electric vehicle or a hybrid electric vehicle. That is, the battery pack 300 including at least one battery module according to an embodiment of the present disclosure as described above may be mounted in a vehicle body of the vehicle according to an embodiment of the present disclosure.

Meanwhile, even though the terms indicating directions such as upper, lower, left, right, front and rear directions are used in the specification, it is obvious to those skilled in the art that these merely represent relative positions for convenience in explanation and may vary based on a position of an observer or an object.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

| | | | |
|---|---|---|---|
| 300: | battery pack | 310: | pack housing |
| 200: | cell assembly | 100: | can-type secondary battery |
| 111, 111a, 111b: electrode terminal, positive electrode terminal, negative electrode terminal | | | |
| 210: | module case | | |
| 212a, 212b: | first frame, second frame | | |
| H1: | hollow | | |
| 311: | outer wall | 315: | screen wall |
| 315a: | recessed portion | R1: | discharge rib |
| H2: | gas discharge hole | H3: | moving hole |
| R2: | guide rib | 315d: | step portion |
| R3: | screen rib | | |
| 230: | bus bar | 240: | power cable |
| 318: | accommodation groove | R5: | fixing rib |

### INDUSTRIAL APPLICABILITY

The present disclosure relates to a battery pack. In addition, the present disclosure may be used in an electronic device to which the battery pack is applied or a vehicle including the battery pack.

## Claims

1. A battery pack, comprising:
at least two cell assemblies respectively including a plurality of can-type secondary batteries arranged in a front and rear direction in a laid-down form so that electrode terminals thereof are located in a left and right direction, the at least two cell assemblies being arranged in a left and right direction; and
a pack housing including an outer wall configured to form an inner space for accommodating the at least two cell assemblies, and a screen wall located between the accommodated at least two cell assemblies so that the at least two cell assemblies do not directly face each other, the screen wall having a recessed portion so that at least a part of the screen wall is spaced apart from an end of the can-type secondary battery by a predetermined distance to reduce the propagation of flame or gas toward other can-type secondary batteries when the flame or gas is discharged from some of the plurality of can-type secondary batteries.

2. The battery pack according to claim 1,
wherein the electrode terminals include a positive electrode terminal and a negative electrode terminal,
the positive electrode terminal of each of the plurality of can-type secondary batteries has a gas vent portion configured to discharge gas inside the can-type secondary battery to the outside when an internal pressure of the can-type secondary battery increases over a predetermined level,
the plurality of can-type secondary batteries are arranged so that at least one can-type secondary battery having the positive electrode terminal located at a left side and at least one can-type secondary battery having the positive electrode terminal located at a right side are alternately provided, and
the recessed portion is provided so that a part of the screen wall facing the positive electrode terminal is recessed in a left direction or a right direction.

3. The battery pack according to claim 2,
wherein a discharge rib protruding in an inner direction is formed at an inner surface of the outer wall of the pack housing so that the outer wall has a space to be separated from the can-type secondary battery by a predetermined distance.

4. The battery pack according to claim 2,
wherein the pack housing has a gas discharge hole perforated in the outer wall thereof to discharge an internal gas to the outside, and
the recessed portion has a moving hole perforated in a part thereof so that the gas discharged through the gas vent portion moves toward the gas discharge hole therethrough.

5. The battery pack according to claim 4,
wherein the recessed portion has a guide rib configured to guide the gas to move toward the moving hole.

6. The battery pack according to claim 2,
wherein some of the plurality of can-type secondary batteries are arranged in the upper and lower direction, and
the screen wall has a step portion formed in a region thereof facing the plurality of can-type secondary batteries stacked in the upper and lower direction so that the step portion has a greater height in the upper and lower direction than the remaining region.

7. The battery pack according to claim 6,
wherein the screen wall includes a screen rib that is located at a middle height of the plurality of can-type secondary batteries stacked in the upper and lower direction, configured to protrude in the left and right direction to prevent the gas discharged from the gas vent portion from moving in the upper and lower direction, and provided to linearly extend in the front and rear direction.

8. The battery pack according to claim 2, further comprising:
an external input/output electric wire electrically connected to the plurality of can-type secondary batteries,
wherein the outer wall of the pack housing includes an accommodation groove recessed in an inner direction to accommodate a part of the electric wire therein and formed to linearly extend along the outer wall, and a plurality of fixing ribs configured to protrude in an upper direction or a lower direction at an inner surface of the accommodation groove and spaced apart from each other by a predetermined distance.

9. The battery pack according to claim 8,
wherein the fixing ribs include:
a first fixing rib configured to protrude upward at an inner lower surface of the accommodation groove; and
a second fixing rib configured to protrude downward at an inner upper surface of the accommodation groove.

10. The battery pack according to claim 2, further comprising:
a module case configured to have an empty space formed therein so that the plurality of can-type secondary batteries are accommodated therein;
at least one bus bar electrically connected to the plurality of can-type secondary batteries;
a battery management unit having a printed circuit board configured to control charging and discharging of the plurality of can-type secondary batteries; and
a sensing wire configured to electrically connect the bus bar and the battery management unit.

11. The battery pack according to claim 10,
wherein the module case has an embedding groove in which the sensing wire is inserted and disposed.

12. The battery pack according to claim 11,
wherein a plurality of fixing protrusions formed to protrude toward the sensing wire are formed at the inside of the embedding groove.

13. The battery pack according to claim 12,
wherein the plurality of fixing protrusions are formed to protrude toward each other so that the sensing wire is interposed between the plurality of fixing protrusions.

14. An electronic device, comprising at least one battery pack according to any one of claims 1 to 13.

15. A vehicle, comprising at least one battery pack according to any one of claims 1 to 13.
